# EUROPÄISCHE PATENTSCHRIFT

(11) **EP 0 837 384 B1**
(45) Veröffentlichungstag und Bekanntmachung des Hinweises auf die Patenterteilung: **15.01.2003**
(21) Anmeldenummer: 97115862.1
(22) Anmeldetag: 12.09.1997
(51) Int. Cl.: G06F 1/16, A45C 5/12

(54) **EDV-System-Koffer**
Carrying case for EDP system
Mallette de transport pour système informatique

(30) Priorität: 18.10.1996 DE 19643040
(43) Veröffentlichungstag der Anmeldung: 22.04.1998
(73) Patentinhaber: PARAT-WERK SCHÖNENBACH GmbH + Co KG, D-42897 Remscheid (DE)
(72) Erfinder: Wöss, Alois, 4161 Ulrichsberg (AT)
(74) Vertreter: Patentanwälte Ostriga & Sonnet

(56) Entgegenhaltungen:
- DE-C- 19 506 740
- DE-U- 29 601 928
- DE-U- 29 618 106

## Beschreibung

Die Erfindung bezieht sich auf ein Tragebehältnis wie Koffer, Tasche od. dgl. für einen tragbaren Computer, einen Drucker und Zubehör gemäß dem Oberbegriff des Anspruchs 1.

Tragbare Computer, insbesondere sog. 'Notebooks', zeichnen sich vor allem durch ihre mobile Verwendbarkeit aus, woraus sich der Wunsch ableitet, geeignete Tragebehältnisse für den Computer, den zugehörigen Drucker und die zu ihrem Betrieb erforderlichen Zubehörteile verfügbar zu haben.

Bekannt ist zunächst ein zweischaliger Koffer, in dessen Bodenteil Gefache untergebracht sind zur Aufnahme der Stromversorgung, der Kabel und der einzelnen Geräte, während der Deckelteil im geschlossenen Zustand des Koffers diese Teile schützt und ggf. noch Aufnahmetaschen für Papier, Dokumente, Schreibutensilien od.dgl. beherbergt. Die Handhabung des Koffers vollzieht sich so, daß sein Deckelteil vom Bodenteil abgenommen und dieser dann mit allen in ihm aufgenommenen Gerätschaften auf den Arbeitstisch gelegt wird, so daß am Computer gearbeitet werden kann. Dies erfordert auf dem Arbeitstisch eine relativ große Arbeitsfläche und wird auch aus anderen Gründen, z.B. wegen des Gesamtgewichts dieser Einheit, als störend empfunden.

Da die Hauptarbeit an dem Computer geleistet wird, der selbst nur geringen Platz beansprucht, wohingegen der über ein Druckeranschlußkabel mit ihm verbundene Drucker auch an anderer Stelle als auf dem Tisch seine Funktion erfüllen kann, ist ein Koffer entwickelt worden, der ebenfalls alle zum Betrieb des Computers und seines Zubehörs notwendigen Teile aufnimmt, dem jedoch für die Arbeit am Computer nur dieser entnommen wird, während die anderen Teile des EDV-Systems, so insbesondere der Drucker, im Koffer verbleiben.

Ein aus DE 93 19 685 U1 bekannter Koffer weist einen Bodenrahmen, zwei Seitenwände, eine Frontwand und eine Rückwand sowie an seiner Oberseite einen Klappdeckel zum Verschluß des Koffers auf. Im Innern des Koffers sind mehrere Aufnahmefächer, so insbesondere eines für den Computer und eines für den Drucker vorgesehen. Die Frontwand ist am Bodenrahmen um eine unten liegende, horizontale Achse schwenkbar angelenkt und läßt sich aus der Lotrechten in eine Neigelage von etwa 45° nach vorn abklappen, nachdem der schalenartige Kofferdeckel geöffnet worden ist. Mit dem Ausklappen der Frontwand schwenkt der Computer teilweise aus dem Innenraum des Tragebehältnisses heraus und läßt sich so besser als bei senkrecht stehender Frontwand entnehmen.

Das Aufnahmefach für den Computer wird von der ausklappbaren Frontwand einerseits und andererseits von einer Trennwand begrenzt, auf deren dem Computer abgewandten Seite weiter innen im Tragebehältnis der Drucker angeordnet ist. Diese Trennwand besteht aus einer in seitliche Halterungen eingesteckten Platte und einem schalenartigen Druckertragkörper, dessen Boden mit der Platte über Scharniere gelenkig verbunden ist. Sind der Kofferdeckel geöffnet, die Frontwand ausgeklappt und der Computer entnommen, läßt sich der Druckertragkörper um etwa 90° ebenfalls nach vorn und zum Teil aus dem Behälterinnenraum herausklappen, bis sein Boden auf Stützen auftrifft, die an der Innenseite der Frontwand besonders angebracht sind. Der Drucker steht in dieser seiner Bedienlage so bereit, daß er, wenn das Tragebehältnis auf dem Boden steht, vom sitzenden Computerbenutzer bedient werden kann, sofern er sich nur weit genug vornüber- und hinunterbeugt.

Dieses bekannte kofferartige Tragebehältnis ist bereits erheblich vorteilhafter und in der Bedienung sinnvoller und geschickter eingerichtet als der eingangs beschriebene zweischalige Koffer, läßt aber noch einige Wünsche offen. So wird es beispielsweise noch als Nachteil empfunden, daß nach Öffnen des Deckels die Frontwand mit dem an ihr anliegenden Computer selbsttätig nach vorn abklappen und aufgrund des resultierenden Schwungmoments die Tasche zum Kippen bringen kann. Da der im vordersten Aufnahmefach nahe der ausklappbaren Frontwand im Behältnis aufgenommene Drucker zusammen mit der Frontwand herausklappt und mit seinem Boden auf der Innenseite der Frontwand liegt, ist es nicht ohne weiteres möglich, ihn lediglich mit einer Hand zu ergreifen, was aufgrund des geringen Gewichts insbesondere von Notebooks an sich aber leicht geschehen könnte. Ein weiterer Nachteil besteht darin, daß im Bedienzustand des Behältnisses, also bei entnommenem Computer, ausgeklappter Frontwand und umgelegtem Druckertragkörper ein unbeabsichtigter Stoß gegen die Frontwand dazu führen kann, daß diese den Druckertragkörper und also den Drucker wieder aus der Bedienlage kippen kann, wodurch Schäden an der Einrichtung entstehen können. Durch das Umlegen des Druckertragkörpers aus der im wesentlichen lotrechten Drucker-Verstaulage in dessen horizontale Bedienlage ist überdies nur ein relativ bodennahes Arbeitsniveau des Druckers erreichbar.

DE 195 06 740 C2 stellt mit dem Ziel, dem gegenüber nennenswerte Bedienungsvorteil zu erreichen, in dieser Hinsicht eine deutliche Verbesserung dar. Bei diesem Koffer ist der Druckertragkörper als Platte ausgebildet, die über eine horizontal Achse schwenkbar mit dem oberen Rand eines Trennwandteils verbunden ist. Die beiden in seitlichen Führungen vertikal verschieblichen Platten können ein Stück nach oben herausgezogen werden. Sobald die Druckertragplatte aus den Führungen freikommt, kann sie mit dem auf ihr befestigten Drucker aus dessen vertikaler Verstaulage in eine horizontale Gebrauchslage umgelegt werden. Die abgeklappte Druckertragplatte wird zwar auch hier unter Einbeziehung der Frontwand des Koffers in der Drucker-Betriebslage abgestützt, jedoch in besonderer Weise auf einem Scheitelbereich, der bei geöffnetem Behälter zwischen einem festen, unteren Frontwandteil und einem um eine horizontale Achse abklappbar an diesem angelenkten oberen Frontwandteil ausgebildet ist.

Wichtig bei dieser bekannten Ausführung ist es, daß Druckertragplatte und Drucker zunächst vom Boden des Behältnisses hochgezogen und der Drucker erst in einer wesentlich höheren Position in seine Betriebslage geschwenkt wird, so daß er auf einem ergonomisch angenehm bodenfernen Arbeitsniveau bereitsteht.

DE 195 06 740 C2 betrifft ein Tragebehältnis für einen Drucker, der in Verstaulage aufrecht aufbewahrt und transportiert und in einer erhöhten Stellung horizontal betrieben wird. Ein besonderes Problem, das mit den an sich sehr vorteilhaften Mitteln nach Patent DE 195 06 740 C2 allein nicht beherrschbar ist, werfen jedoch Drucker auf, die auch in Bedienlage aufrecht stehen. Ein prominentes Beispiel hierfür ist der Druckertyp HP 340 der 'DeskJet'-Familie der amerikanischen Herstellerfirma Hewlett Packard.

Verglichen mit Druckern konventionellen Designs steht dieser Drucker praktisch aufrecht auf dem Rücken. An die Oberseite, die nun aber eine lotrechte Wand darstellt, kann ein Einzelblatteinzug angebracht werden, während sich im Boden, der nunmehr gegenüberliegenden Seitenwand, ein schlitzförmiger Papierauswurf befindet. Die bevorzugte Verstaulage für jeden Drucker ist wegen der optimalen Raumausnutzung stets eine aufrechte oder Hochkantlage, aber ein Drucker dieses Typs soll zwar auch aus seiner Verstaulage im Tragebehältnis in eine erhöhte Betriebsposition verbracht, darf jedoch nicht umgelegt werden.

Aus DE 296 01 928 U1 ist ein Tragebehältnis bekannt, das in geschickter Weise so weitergebildet ist, daß im Betrieb aufrecht stehende Drucker in ergonomisch günstiger Zuordnung zum Tragebehältnis bzw. zur Position des sitzenden Benutzers sicher betrieben werden können. Erreicht wird dies hier dadurch, daß innen an wenigstens einer sonstigen Wand des Drucker-Aufnahmefachs mindestens ein Druckerstützkörper vorgesehen ist, der aus einer wandnahen Nichtgebrauchslage in eine Unterstützungsstellung unter den Drucker bringbar ist, der in hochgezogener Stellung des Trennwandteils hierzu vorübergehend aus dem Bewegungsbereich des Druckerstützkörpers verlagerbar sowie anschließend auf den betriebsbereiten Druckerstützkörper auflagerbar ist und sich die Drucker-Gebrauchslage von der Drucker-Verstaulage vornehmlich durch ein erhöhtes Zugriffsniveau unterscheidet. In der Praxis bedeutet dies, daß der Drucker mit dem Druckertragkörper, an dem er gehalten ist, aus der behältertiefen Verstaulage hochgezogen wird, wobei er vorübergehend über seine Gebrauchslage hinaus gebracht wird, bis der mindestens eine Druckerstützkörper bereitgestellt ist, auf den er sodann ein kleines Stück zurückbewegt wird. Eine besonders einfache Möglichkeit, dies zu bewirken, kann bereits in einem kurzfristigen, geradlinigen 'Überheben' über den für seine Bereitstellung erforderlichen Bewegungsbereich des Druckerstützkörpers hinaus bestehen.

Aufgabe der vorliegenden Erfindung ist nunmehr die Bereitstellung einer universellen Lösung für ein gattungsgemäßes Tragebehältnisses, das sowohl für horizontal als auch vertikal betriebene Drucker gleichermaßen geeignet ist.

Die Lösung dieser Aufgabe ist im Anspruch 1 angegeben. Demnach ist die Erfindung insbesondere dadurch gekennzeichnet, daß die Trennwand einstückig ausgebildet ist und ihrer Gesamtheit die Druckertragplatte ausbildet, daß die Schwenkachse von Achszapfen definiert ist, die über die Trennwandränder vorstehend in die seitlichen Führungen eingreifen und daß die Schwenkachse mit Abstand vom unteren bzw. hinteren Trennwandrand angeordnet ist.

Die nunmehr einteilige Druckertragplatte kann aufgrund fehlender Gelenkverbindungen der bislang zweiteiligen Ausführung insgesamt stabiler ausgeführt sein. Zugleich ist die Gesamtfläche der Druckertragplatte vergrößert, so daß jeder beliebige transportable Kleindrucker einen ihm am besten geeigneten Platz auf dieser Fläche finden kann. Durch die besondere Anordnung der Schwenkachse mit Abstand vom (in der Verstaulage) unteren bzw. (in der Betriebslage) hinteren Trennwandrand wird erreicht, daß sich die Druckertragplatte in der Bedienlage des Druckers auch zum inneren Bereich des Tragebehältnisses in Richtung auf deren Rückwand hin erstrecken kann und folglich nicht in statisch ungünstiger Weise zu weit nach vorn aus dem Tragebehältnis hinausragt.

Zur Halterung eines insbesondere horizontal betriebenen Druckers auf der Druckertragplatte genügen beispielsweise selbstklebend angeheftete Abschnitte eines Flächenreißverschlusses (einem aus Flauschband und Hakenband bestehenden Klettverschlusses). Solche, auch Klettenpads genannte trennbare Befestigungsmittel kann man auch bei einem sowohl vertikal verstaubaren als auch vertikal bedienbaren Drucker vorsehen, wobei zusätzlich mittels einer Scharnieranordnung zwischen Drucker und Druckertragplatte dafür gesorgt ist, daß, während der Drucker seine vertikale Lage, die er verstaut einnimmt, auch in der Betriebsstellung, wenngleich auf höherem Arbeitsniveau, beibehält, die Druckertragplatte von der lotrechten Drucker-Verstaulage in eine horizontale Drucker-Bereitschaftsstellung verschwenkt werden kann.

Im Zusammenhang mit einem vertikal bedienbaren Drucker ist es von Bedeutung, daß entsprechend der Erfindung ansonsten keine besonderen Mittel zu seiner Halterung oder zur Einhaltung seiner Bedienlage, wie der gesonderte Druckerstützkörper entsprechend DE 296 01 928 U1, mehr erforderlich sind, da deren Funktion die großflächige, einteilige Druckertragplatte mit übernehmen kann.

Zur alleinigen oder zusätzlichen Stabilisierung der Druckerbetriebslage kann die aus der Verstaulage als Trennwand in Druckerbedienlage herausgeschwenkte Druckertragplatte sich auf dem Scheitelbereich eines ersten, feststehenden und eines zweiten, nach außen abklappbaren Frontwandteils des Tragebehälnisses abstützen, wie es im Prinzip bereits in DE 195 06 740 C2 und in DE 296 01 928 U1 dargestellt und beschrieben ist. Im Rahmen vorliegender Erfindung ist jedoch in erster Linie daran gedacht, eine solche Stütze ggf. ergänzend vorzusehen, wohingegen entsprechend einem bevorzugten Ausführungsbeispiel die Trennwand als ausgeschwenkte Druckertragplatte - vorzugsweise selbsttätig - in der Druckerbedienlage verriegelbar sein soll. Erreicht wird dies dadurch, daß jeder Führung eine Einschubtasche für den Achszapfen mit einer ihn unterfangenden Auflagerstütze zugeordnet ist. Nach dem Heraufziehen und Umschwenken brauch die Druckertragplatte mit ihren Achszapfen dann lediglich - z.B. nach hinten - in diese Einschubtaschen eingeschoben zu werden, um in Vertikalrichtung sicher abgefangen und gelagert zu sein.

Vereinfacht werden kann diese Handhabung der Sicherung dadurch, daß in die Bewegungsbahn der Achszapfen in Auszugsrichtung ein Begrenzungsanschlag eingreift, der für eine lagegerechte Zuordnung der Einschubtasche sorgt, ohne daß hierzu besondere Aufmerksamkeit des Benutzers erforderlich ist.

Der Bedienungskomfort läßt sich noch steigern, wenn entsprechend einem weiteren Erfindungsmerkmal der Führung eine Steuerkulisse zugeordnet ist, die jeweils einen vom Achszapfen beabstandeten Steuerzapfen führt. Dabei kann der Steuerkulisse wiederum eine Steuerfläche für den Steuerzapfen zugeordnet sein, die gegen Ende der Schwenkbewegung der Trennwand deren Achszapfen auf die Auflagerstütze leitet. Hierdurch gestaltet sich das Verlagern der Trennwand aus der Transportstellung als Druckertragplatte in die Druckerbedienlage nach dem einfachen Prinzip des Sehens und Gebrauchens. Denn es muß nichts weiter getan werden, als die Trennwand mit dem Drucker zu ergreifen, nach oben zu ziehen sowie nach vorn herunterzuschwenken, bis die gebrauchsfähige und sogleich verriegelte Lage für den Drucker automatisch erreicht ist.

Zur zusätzlichen Erhöhung der Stabilität der Druckertragplatte in der Druckergebrauchslage kann der Steuerkulisse eine Auflagerfläche für den Steuerzapfen in der Bedienstellung der Trennwand zugeordnet sein, so daß die Druckertragplatte im Bereich der - dann hinteren - Steuerzapfen auch in Vertikalrichtung sicher abgestützt ist.

Zum leichten Einbau und auch Austausch der Trennwand/Druckertragplatte ist vorgesehen, daß die Führung neben dem Begrenzungsanschlag in einer zur Längsrichtung des Führungskanals unter einem Winkel abweichenden Richtung offen ist. Durch diese Öffnungen bzw. offenen Kanäle können die Achszapfen und die Steuerzapfen der Trennwand/Druckertragplatte auf einfachste Weise in die Führungen eingesteckt oder aus ihnen herausgezogen werden.

Bezüglich einer einfachen Gestaltung des Tragebehältnisses und der Mittel zu Führung und Festlegung der Trennwand/Druckertragplatte ist vorteilhafterweise noch vorgesehen, daß sämtliche Führungen und Kulissen einstückig-stoffschlüssige Bestandteile von als Spritzgießbauteilen ausgebildeten Seitenwänden (sog. Keilen) des Tragebehältnisses sind.

Im übrigen versteht sich die Erfindung am besten aus ihrer nachfolgenden Beschreibung anhand eines in den Zeichnungen dargestellten Ausführungsbeispiels. Darin zeigen:
- Fig. 1: eine Ansicht des geschlossenen Tragebehältnisses,
- Fig. 2: einen Längsschnitt durch das Tragebehältnis entsprechend der Schnittangabe II-II in Fig. 1, mit einem horizontal zu bedienenden Drucker in Verstaulage,
- Fig. 3: eine Innenansicht auf eine Seitenwand des Tragebehältnisses mit den Führungsanordnungen für die Verlagerung und Abstützung der Trennwand,
- Fig. 4: eine Seitenansicht zu Fig. 3,
- Fig. 5: einen Längsschnitt durch das geöffnete Tragebehältnis mit aus ihm bereits entnommenem Computer und aus seiner Verstaulage in Bedienlage umgelegtem, horizontal zu bedienenden Drucker,
- Fig. 6: eine Fig. 2 entsprechende Darstellung mit einem verstauten, vertikal zu bedienenden Drucker, und
- Fig. 7: eine Fig. 5 entsprechende Darstellung des vertikal zu bedienenden Druckers aus Fig. 6 in dessen Bedienposition.

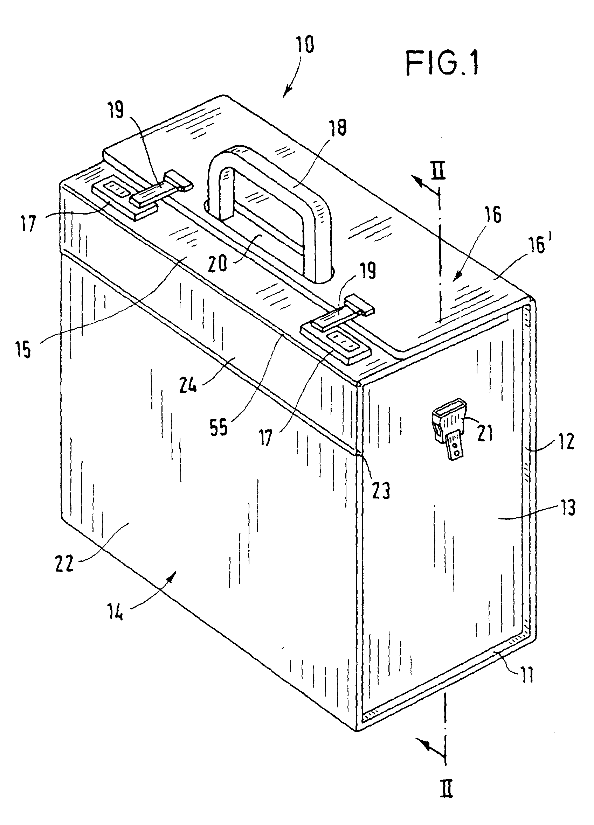

Das in Fig. 1 beispielhaft dargestellte und in seiner Gesamtheit mit 10 bezeichnete Tragebehältnis ist nach Art eines Pilotenkoffers gestaltet. Es umfaßt einen, ggf. auch als Rahmenkörper ausgestalteten, Boden 11, eine Rückwand 12, ferner zwei einander gegenüberliegende Seitenwände 13 (bei Koffern der dargestellten Art auch 'Keile' genannt), sowie eine Frontwand 14 und eine zweiteilige, aus einer innenliegenden Deckelklappe 15 und einem diese teilweise überfangenden außenliegenden Deckelteil 16 bestehende Verschlußanordnung.

Die innenliegende Deckelklappe 15 weist zwei Schlösser 17 sowie einen schwenkbaren Griff 18 auf, und die außenliegende Überfall-Deckelklappe 16' zwei Schließriegel 19 und einen Durchbruch 20 für den Durchgriff des Griffes 18. Mit 21 schließlich sind an den Seitenwänden 13 angebrachte Halterungen zum ggf. wiederentfernbaren Anstecken eines nicht weiter dargestellten Tragegurtes bezeichnet.

Die Frontwand 14 ist unterteilt in einen unteren, feststehenden Frontwandteil 22 und einen oberen, um eine horizontale Achse 23 schwenkbaren Frontwandteil 24. Die Höhen des feststehenden Frontwandteils 22 und des beweglichen Frontwandteils 24 addieren sich - etwa im Verhältnis 4/1 - zur Gesamthöhe des Tragebehältnisses 10. Im übrigen stellt der obere bewegliche Frontwandteil 24 die Verbindung zwischen den feststehenden Frontwandteilen 22 und der innen liegenden Deckelklappe 15 her, wobei die Deckelklappe 15 und der Frontwandteil 24 (im rechten Winkel zueinander) starr oder aber - und zwar bevorzugt wie beim dargestellten Ausführungsbeispiel - über eine im geschlossenen Zustand des Behältnisses kofferkantenbildende Falzung 55 oder Scharnierung beweglich miteinander verbunden sein können.

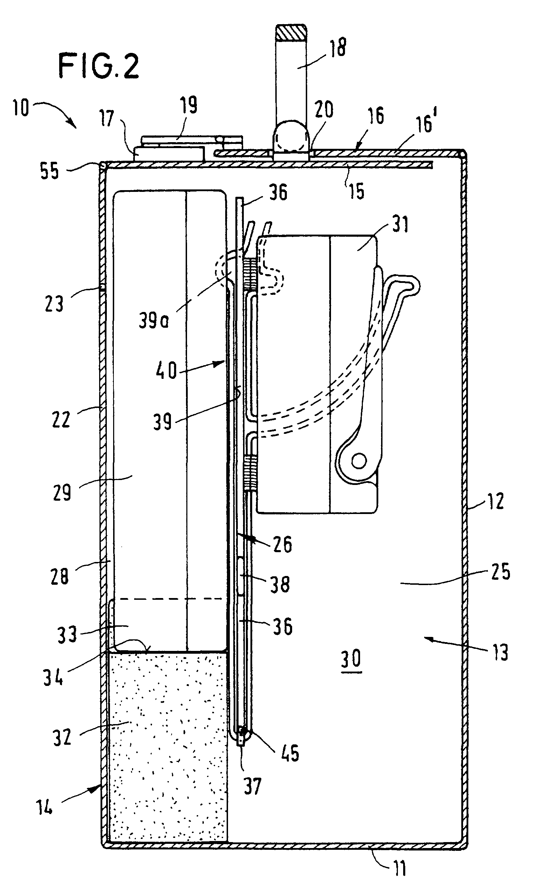

Wie sich aus dem Längsschnitt der Fig. 2 ergibt, dient das Behälterinnere 25 zur Aufnahme zahlreicher, für den Betrieb eines tragbaren Computers, insbesondere eines Notebooks oder auch eines seltener gewordenen Laptops, geeignete Aufnahmen. Durch eine vertikale, sich längs weitestgehend durch den Innenraum 25 des kofferartigen Tragebehältnisses 10 erstreckende Trennwand 26 ist frontwandseitig ein Aufnahmeraum 28 für einen Computer 29 und daran anschließend ein Aufnahmeraum 30 für einen Drucker 31 geschaffen.

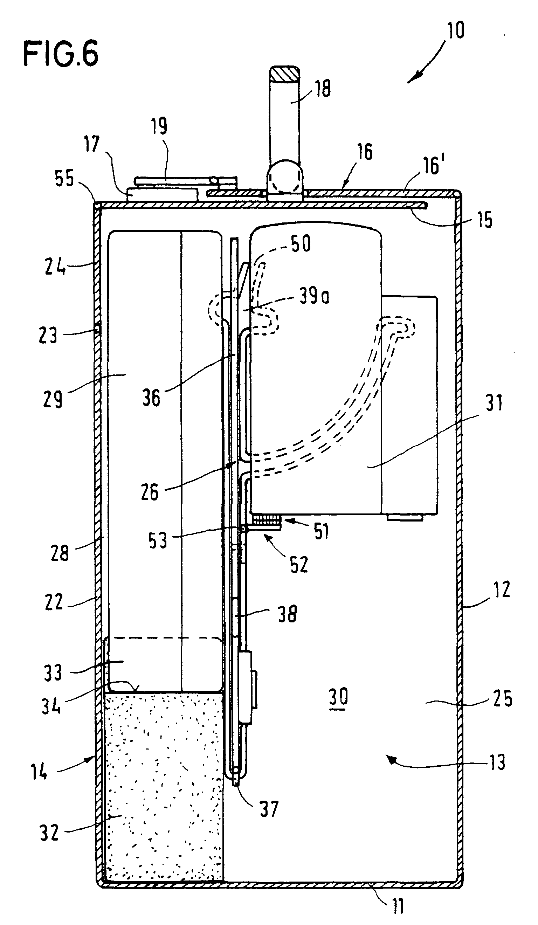

Drucker 31, die in nachfolgend beschriebener Weise in der in Fig. 2 bzw. Fig. 6 dargestellten Verstaulage aufgenommen sind, gestatten aufgrund der heute üblichen miniaturisierten Bauweise die Anordnung weiterer Gegenstände, so z.B. eines Netzgerätes in demselben Aufnahmefach 30 unterhalb des jeweiligen Druckers 31. Auch nicht dargestellte Druckerkabel, eine Maus u.dgl. lassen sich dort verstauen.

Zur Anpassung des von der Frontwand 14 begrenzten Aufnahmefachs 28 an die individuelle Größe bestimmter Marken oder Typen von Computern 29 sind zwei Formkörper 32 von im wesentlichen L-förmiger Grundgestalt als Adapter-Einlagen vorgesehen. Diese werden in die unteren Ecken des Aufnahmefachs 28 derart eingelegt, daß der Computer 29 mit seinen unteren Eckbereichen 33 jeweils auf einem Horizontalschenkel 34 aufliegt und seitlich durch die vertikalen Schenkel 35 lagestabilisiert in dem Aufnahmefach 28 gehalten ist. Soll das Tragebehältnis 10 zur Aufbewahrung eines Computers 29 abweichender Größe dienen, werden die Adapter-Einlagen 32 gegen solche entsprechend anderer Dimension ausgetauscht. Es handelt sich im übrigen um einfache Teile aus Kunststoff, z.B. Schaumstoff.

Vorteilhaft ist zunächst, wenn der Computer 29, wie es Fig. 2 veranschaulicht, möglichst hoch im Innenraum des Behältnisfachs 28 bereitgehalten wird, damit sich, wenn der Koffer geöffnet und der obere Frontwandteil 24 nach außen abgeklappt ist, der sich Computer 29 an seinem oberen Rand mit einer Hand leicht ergreifen und aus dem Koffer herausnehmen läßt.

Die Trennwand 26, die den Aufnahmeraum 28 für den Computer 29 gegen den Aufnahmeraum 30 für den Drucker 31 abteilt, ist als einteilige und einstückige Platte 36 ausgeführt. An jeder Längsseite weist die Platte 36 mit Abstand von ihrem unteren Rand 37 jeweils einen sich in Plattenrichtung länglich erstreckenden Achszapfen 38 auf, der in einem vertikalen Abschnitt 39 einer Führung 40 gleiten kann. In jeweils eine jeder Tragebhältnis-Seitenwand 13 zugeordneten Führung 30 greift jeweils nur ein solcher Achszapfen 38 ein, nicht aber die Platte 36 selbst.

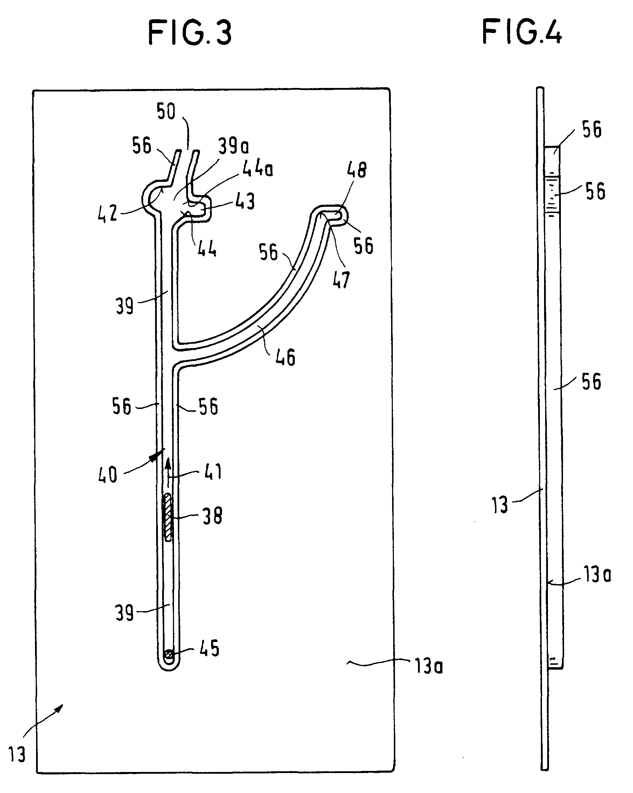

Weiter oben bildet die Führung 40 im Anschluß an ihren lineare Führungsabschnitt 39 ein Schwenklager 39a für den Achszapfen 38 aus, das einige Besonderheiten aufweist, wie schon seine eigentümliche Form zeigt, wozu zum besseren Verständnis auf Fig. 3 verwiesen wird, die dieser Führung und weiteren Erfindungsmerkmalen in diesem Zusammenhang besonders gewidmet ist. Zu beachten ist dabei, daß jede der beiden Seitenwände in spiegelverkehrter Anordnung gleich gestaltet ist.

Eine erste Besonderheit besteht darin, daß in die Bewegungsbahn jedes der Achszapfen in Auszugsrichtung (Pfeil 41) ein Begrenzungsanschlag 42 eingreift und eine zweite darin, daß der Führung 40 eine Einschubtasche 43 für den Achszapfen 39 mit einer ihn unterfangenden Auflagerstütze 44 sowie einer ihn übergreifenden Schulter 44a zugeordnet ist.

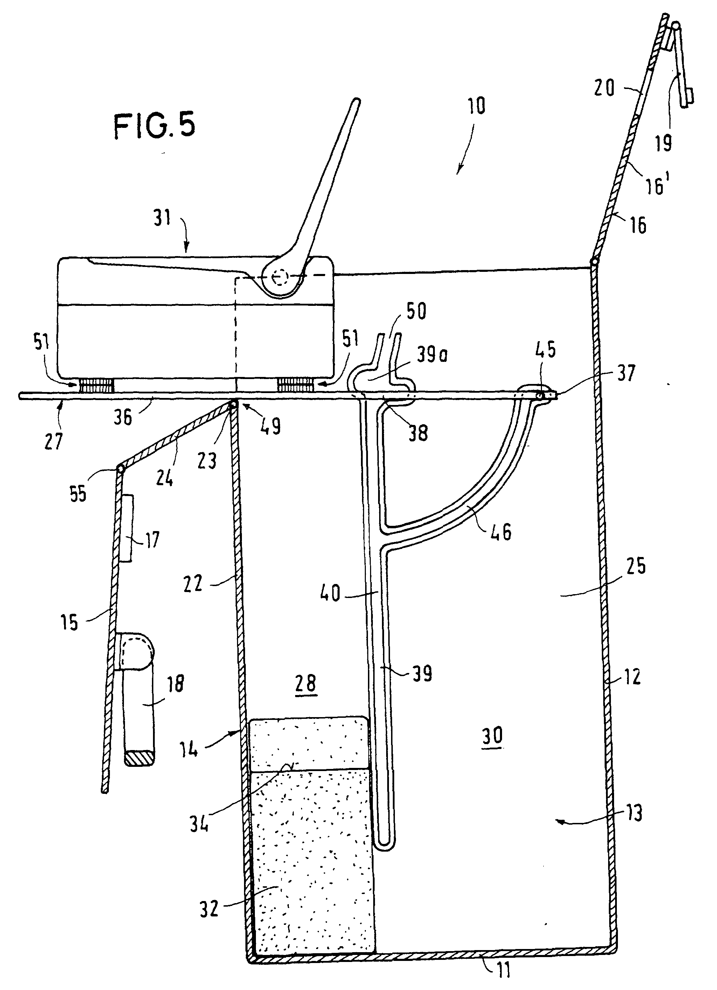

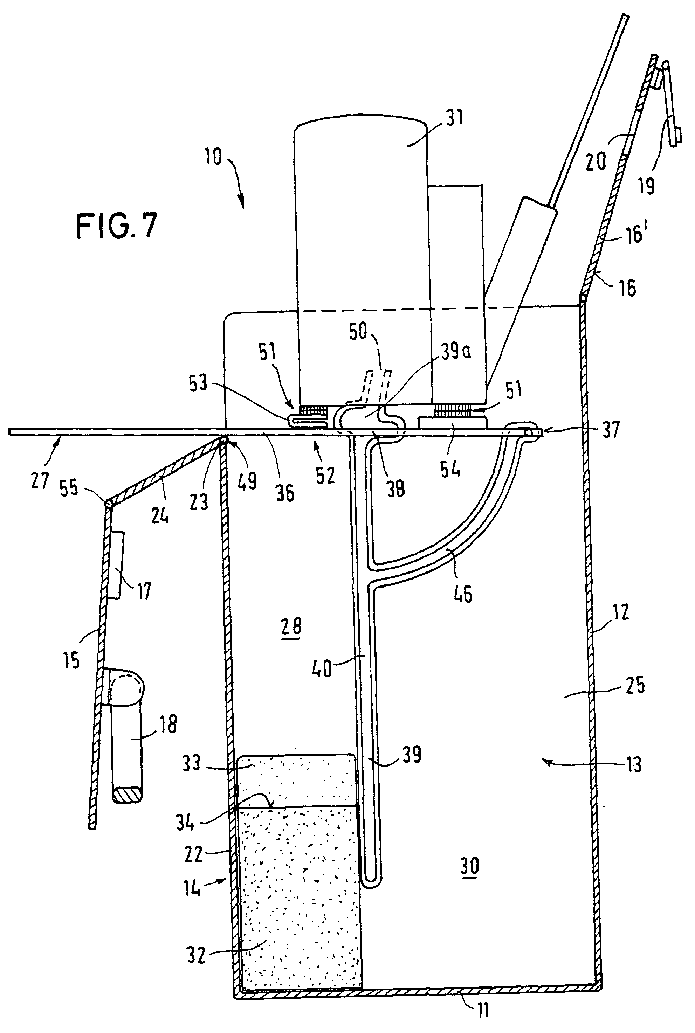

Hieraus resultiert, daß die die Trennwand 26 darstellenden Platte 36 einfach soweit nach oben gezogen werden kann, bis ihr jeweiliger Achszapfen 38 an dem Auszugsweg-Begrenzungsanschlag 42 anstößt. Wird dann die Platte 36 - bezüglich der Zeichnung entgegen dem Uhrzeigersinn - verschwenkt, können die aufgrund der Verschwenkung sodann in eine im wesentlichen horizontale Lage verbrachten Achszapfen 38 in die jeweilige Einschubtasche 43 eingeschoben werden. Die Platte 36 befindet sich jetzt in ihrer Funktion als Druckertragplatte 27 in der in Fig. 5 bzw. Fig. 7 gezeigten Drucker-Bedienlage.

Um diese Handhabung und auch die gegenläufige beim Zurückschwenken der Platte 36 von ihrer äußeren Position als Druckertragplatte 27 in ihre tragebehälterinnere Lage als Trennwand 27 zu vereinfachen, sind Maßnahmen getroffen, diese Schwenk- und Schiebevorgänge quasi automatisch zu steuern.

Eine erste dieser Maßnahmen besteht in dem bereits erwähnten Auszugs-Begrenzungsanschlag 42. Sobald die Achszapfen 38 daran anstoßen, gelangen nämlich Steuerzapfen 45, von denen jeweils einer am unteren Ende der Platte 36 vom jeweils selben Rand wie die Achszapfen 38 und parallel zu ihnen absteht, in den Öffnungsbereich einer kreisbogenförmigen Steuerkulisse 46. Diese Steuerkulisse 46 führt den Steuerzapfen 45 während der Verschwenkung der Platte 36 um etwa 90°. Dem Endbereich der Steuerkulisse 46 ist eine im wesentlichen bogenförmig-schräg verlaufende Steuerfläche 47 und, daran anschließend, eine endseitig geschlossene Tasche 48 zugeordnet. Beim Auftreffen des Steuerzapfens 45 auf die Steuerfläche 47 wird der Steuerzapfen 45 gleichsam selbsttätig in die quer verlaufende Tasche 48 hinein geführt, in der er nach oben und unten hin von den Wandungen der Kulisse 46 sicher abgestützt bzw. übergriffen ist. Gleichzeitig bewirkt die dabei durch Verschwenken der Platte 36 erzwungene Querbewegung aber auch, daß die Achszapfen 38 in ihre eigenen Aufnahmetaschen 43 hinein geleitet werden, worin auch sie gegen Verlagerungen nach oben und nach unten gesichert aufgenommen sind.

Ob nun ein Drucker 31 in seiner Bedienlage weiter vorn wie zweckmäßig der horizontal zu bedienende Drucker 31 in Fig. 5 oder weiter hinten auf der als Druckertragplatte 27 dienenden Platte 36 ruht wie der senkrecht zu betreibende Drucker 31 entsprechend Fig. 7: Jeder Drucker findet unbeschadet seiner typischen Bedienlage auf der Druckertragplatte 27 eine gegen weiteres Schwenken oder Rückschwenken verriegelte und entsprechend stabile Position.

Zusätzlich kann der Scheitelbereich 49 zwischen dem festen unteren Frontwandteil 22 und dem abklappbaren oberen Frontwandteil 24 des Tragebehältnisses 10 auch, und zwar bevorzugt zusätzlich, der Unterstützung der Druckertragplatte 27 dienen. Bei weit vorn angeordneten Druckern wie bei dem Drucker 31 nach Fig. 5 könnte allein diese Auflage genügen. Allerdings ist die Abstützung der Zapfen 38 und 45 in den Taschen 43 und 48 sehr wohl vorteilhaft, weil dadurch vor allem auch eine Sperre gegen Zurückschwenken der Druckertragplatte gebildet ist, so daß unbeabsichtigte Stöße vorn unter die Druckertragplatte 27 keinen Schaden zur Folge haben können.

Um die Trennwand/Druckertragplatte 26/27 auf einfache Weise in das Tragebehältnis 10 einstecken und auch aus ihm entfernen zu können, weist die Führung 40 oberhalb des Schwenklagers 39a einen nach oben offenen Führungsabschnitt 50 auf.

Im übrigen sind beim Ausführungsbeispiel die Führung 40 und die Kulisse 46 durch auf der Innenfläche 13a einer Tragehältnis-Seitenwand 13 erhabene, die Führungs- und Bewegungsbahnen begrenzende bzw. definierende Rippen 56 und diese mit den Seitenwänden 13 einstückig-stoffschlüssig ausgebildet. Die Figuren 3 und 4 lassen dies besonders anschaulich erkennen.

Ein horizontal bedienbarer Drucker 31 kann mittels selbstklebender Flächenhaftverschlußelemente 51 (Klettenpads) fest, wenngleich abnehmbar, unmittelbar auf der Druckertragplatte 27 angebracht werden. Da die Trennwand/Druckertragplatte 26/27 bezüglich eines vertikal bedienbaren Drucker 31 entsprechend Fig. 6 und 7 beim Wechsel von dessen Verstaulage (Fig. 6) in die Bereitschaftsstellung (Fig. 7) und umgekehrt eine relative Schwenkbewegung ausführen muß, ist ein solcher Drucker 31 mittels eines Scharnierbandes 52 mit zur Schwenkachse der Trennwand/Druckertragplatte 26/27 paralleler Schwenkachse 53 befestigt. Das Scharnierband 52 ist dann bevorzugt mittels doppelseitiger Klebebandstreifen an der Trennwand/Druckertragplatte 26/27 befestigt und der Drucker 31 mittels der Klettenbandpads 51 abnehmbar an der zweiten Scharnierleiste angebracht. Das Scharnierband 52 kann als Kunststoffspritzgießteil mit werkstoffeinheitlich-stoffschlüssiger Scharnierachse 53 z.B. in Form eines Filmscharniers ausgebildet sein.

Auf der dem Scharnierband 52 gegenüberliegenden Schmalseite des Druckers 31 kann dieser zur Wahrung einer genau bestimmten, z.B. exakt horizontalen Position durch eine distanzierende Unterlage 54, z.B. ein Schaumstoffkissen, unterfüttert sein. Bedarfsweise können auch hier noch Klettenpads 51 vorgesehen sein, deren jeweils einer Teil selbstklebend unter dem Drucker 31 und der jeweilige andere Teil selbstklebend auf der Unterlage 54 befestigt ist.

Je nach Bestimmung für einen horizontal oder vertikal zu betreibenden Drucker 31 kann die Trennwand/Druckertragplatte 26/27 werkseitig vorbereitet sein durch Ausrüstung mit den jeweils entsprechend benötigten Teilen von Befestigungsteilen 51 bis 54. Um dem Benutzer die wahlfreie Einrichtung zu überlassen, können die Befestigungsteile 51 bis 54 auch insgesamt dem Tragebehältnis zur individuellen Einrichtung in Abstimmung auf den verwendeten Drucker 31 beigelegt sein.

## Patentansprüche

1. Tragebehältnis wie z.B. Koffer, Tasche od. dgl. für einen darin aufzubewahrenden tragbaren Computer, einen Drucker sowie für Zubehör, wie Netzteil, Kabel, Maus, Druckerpapier, mit öffenbarem Behältnis-Deckelteil und mit einem ein Drucker-Aufnahmefach von einem weiteren Fach wie Computer-Aufnahmefach abgrenzenden, in seitlichen Aufnahmen vertikal verschieblich gehaltenen Trennwand, von der mindestens ein Teil nach teilweisem Hochziehen der Trennwand mit dem Drucker in dessen Bedienstellung schwenkbar ist, **dadurch gekennzeichnet, daß** die Trennwand (26) einstückig ausgebildet ist und ihrer Gesamtheit die Druckertragplatte (27) ausbildet, daß die Schwenkachse von Achszapfen (38) definiert ist, die über die Trennwandränder vorstehend in die seitlichen Führungen (40) eingreifen und daß die Schwenkachse mit Abstand vom unteren bzw. hinteren Trennwandrand (37) angeordnet ist.

2. Tragebehältnis nach Anspruch 1, **dadurch gekennzeichnet, daß** jeder Führung (40) eine Einschubtasche (43) für den Achszapfen (38) mit einer ihn unterfangenden Auflagerstütze (44) und einem überfangenden Abschnitt (44a) zugeordnet ist.

3. Tragebehältnis nach Anspruch 1 oder 2, **dadurch gekennzeichnet, daß** in die Bewegungsbahn der Achszapfen (38) in Auszugsrichtung (Pfeil 41) ein Begrenzungsanschlag (42) eingreift.

4. Tragebehältnis nach Anspruch 2 oder 3, **dadurch gekennzeichnet, daß** der Achszapfen (38) einen in Richtung der Plattenebene länglichen Querschnitt aufweist.

5. Tragebehältnis nach Anspruch 2 oder 3, **dadurch gekennzeichnet, daß** der Führung (40) eine Steuerkulisse (46) zugeordnet ist, die jeweils einen vom Achszapfen (38) beabstandeter Steuerzapfen (45) führt.

6. Tragebehältnis nach Anspruch 5, **dadurch gekennzeichnet, daß** der Steuerkulisse (46) eine Steuerfläche (47) für den Steuerzapfen (45) zugeordnet ist, die gegen Ende der Schwenkbewegung der Trennwand (26) deren Achszapfen (38) in die Tasche (43) leitet.

7. Tragebehältnis nach Anspruch 5 oder 6, **dadurch gekennzeichnet, daß** der Steuerkulisse (46) eine Tasche (48) für den Steuerzapfen (45) in der Druckerbedienstellung zugeordnet ist.

8. Tragebehältnis nach Anspruch 2, **dadurch gekennzeichnet, daß** die Führung (40) neben dem Begrenzungsanschlag (42) in einer zur Längsrichtung des Führungskanals (39) unter einem Winkel abweichenden Richtung (bei 50) offen ist.

9. Tragebehältnis nach Anspruch 1 oder einem der darauf folgenden, **dadurch gekennzeichnet, daß** sämtliche Führungen und Kulissen einstückig-stoffschlüssige Bestandteile von als Spritzgießbauteilen ausgebildeten Seitenwänden (13) (sog. Keilen) des Tragebehältnisses (10) sind.

10. Tragebehältnis nach Anspruch 1 oder einem der darauf folgenden, **dadurch gekennzeichnet, daß** vom Scheitelbereich (49) eines ersten, feststehenden und eines zweiten, nach außen abklappbaren Frontwandteils (22; 24) des Tragebehälnisses (10) eine Unterstützung für die Druckertragplatte (27) ausgebildet ist.

## Claims

1. Carrying receptacle such as e.g. a case, bag or the like for storing a portable computer, a printer as well as accessories, such as a power supply unit, cable, mouse, printer paper, having an openable receptacle lid part and having a partition wall, which delimits a printer compartment from a further compartment such as a computer compartment and is held in a vertically displaceable manner in lateral receivers and of which at least one part, after the partition wall has been drawn partially upwards, is capable of swivelling with the printer into the latter's operating position, **characterized in that** the partition wall (26) is of a one-piece design and in its entirety forms the printer-carrying panel (27), that the swivelling axis is defined by swivel pins (38), which project from the partition wall edges and engage into the lateral guides (40), and that the swivelling axis is disposed at a distance from the . bottom and/or back partition wall edge (37).

2. Carrying receptacle according to claim 1, **characterized in that** an insertion pocket (43) for the swivel pin (38) is associated with each guide (40) and comprises a bearing support (44) and a portion (44a) for respectively underpinning and overlapping the swivel pin.

3. Carrying receptacle according to claim 1 or 2, **characterized in that** a limit stop (42) engages in withdrawal direction (arrow 41) into the path of motion of the swivel pins (38).

4. Carrying receptacle according to claim 2 or 3, **characterized in that** the swivel pin (38) has a cross section, which is oblong in the direction of the panel plane.

5. Carrying receptacle according to claim 2 or 3, **characterized in that** a control gate (46) is associated with the guide (40) and guides in each case a control pin (45) disposed at a distance from the swivel pin (38).

6. Carrying receptacle according to claim 5, **characterized in that** a control surface (47) for the control pin (45) is associated with the control gate (46) and, towards the end of the swivelling motion of the partition wall (26), guides the latter's swivel pin (38) into the pocket (43).

7. Carrying receptacle according to claim 5 or 6, **characterized in that** a pocket (48) for the control pin (45) is associated with the control gate (46) in the printer operating position.

8. Carrying receptacle according to claim 2, **characterized in that** the guide (40) next to the limit stop (42) is open (at 50) in a direction deviating at an angle from the longitudinal direction of the guide channel (39).

9. Carrying receptacle according to claim 1 or one of the claims following claim 1, **characterized in that** all of the guides and gates are integral-cohesive component parts of side walls (13) (so-called gussets) in the form of injection-moulded components of the carrying receptacle (10).

10. Carrying receptacle according to claim 1 or one of the claims following claim 1, **characterized in that** a support for the printer-carrying panel (27) is formed by the crest region (49) of a first, fixed and a second, outwardly and downwardly foldable front wall part (22; 24) of the carrying receptacle (10).

## Revendications

1. Mallette de transport, tel que par exemple valise, pochette ou analogue, pour un ordinateur portable, devant y est conservé, une imprimante, ainsi que pour un accessoire, tel qu'un élément de réseau, un câble, une souris, du papier pour imprimante, avec une partie formant couvercle de mallette ouvrable, avec une paroi de séparation maintenue de façon à être déplaçable verticalement dans des logements latéraux, paroi de séparation délimitant un compartiment de logement d'imprimante vis-à-vis d'un autre compartiment, tel qu'un compartiment de logement d'ordinateur, paroi de séparation dont au moins une partie est susceptible d'être pivotée, après avoir effectué un relèvement partiel de la paroi de séparation, avec l'imprimante, à sa position d'utilisation, **caractérisée en ce que** la paroi de séparation (26) est réalisée d'une seule pièce et forme dans sa totalité la plaque support d'imprimante (27), **en ce que** l'axe de pivotement est défini par des tourillons d'axe (38), s'engageant dans les guidages latéraux (40), en étant en saillie sur les bords de la paroi de séparation, et **en ce que** l'axe de pivotement est disposé à distance du bord de paroi de séparation inférieur ou arrière (37).

2. Mallette de transport selon la revendication 1, **caractérisé en ce qu'**à chaque guidage (40) est associée une poche d'insertion (43) pour le tourillon d'axe (38), avec un appui de pose (44) l'emprisonnant depuis le dessous, et un tronçon (44a) l'emprisonnant par le dessus.

3. Mallette de transport selon la revendication 1 ou 2, **caractérisé en ce qu'**une butée de limitation (42) s'engage dans la trajectoire de déplacement des tourillons d'axe (38), dans la direction de l'extraction (flèche 41).

4. Mallette de transport selon la revendication 2 ou 3, **caractérisé en ce** le tourillon d'axe (38) présente une section transversale allongée dans la direction du plan de plaque.

5. Mallette de transport selon la revendication 2 ou 3, **caractérisé en ce qu'**au guidage (40) est associée une coulisse de commande (46) qui assure chaque fois le guidage d'un téton de commande (45), espacé du tourillon d'axe (38).

6. Mallette de transport selon la revendication 5, **caractérisé en ce qu'**à la coulisse de commande (46) est associée une surface de commande (47) pour le téton de commande (45), qui assure le guidage du tourillon d'axe (38) de la paroi de séparation (26) dans la poche (43), vers la fin du déplacement de pivotement de la paroi de séparation (26).

7. Mallette de transport selon la revendication 5 ou 6, **caractérisé en ce qu'**à la coulisse de commande (46) est associée une poche (48) pour le téton de commande (45), à la position d'utilisation de l'imprimante.

8. Mallette de transport selon la revendication 2, **caractérisé en ce que**, à côté de la butée de limitation (42), le guidage (40) est ouvert (en 50) dans une direction différente, de la valeur d'un certain angle, par rapport à la direction longitudinale du canal de guidage (39).

9. Mallette de transport selon la revendication 1 ou selon l'une des revendications suivantes, **caractérisé en ce que** l'ensemble des guidages ou des coulisses sont des composants d'une seule pièce - impliqués dans une liaison par la matière - de parois latérales (13) (ce que l'on appelle les coins) de la mallette de transport (10), parois latérales réalisées sous la forme de pièces moulées par injection.

10. Mallette de transport selon la revendication 1 ou selon l'une des revendications suivantes, **caractérisé en ce qu'**un appui pour la plaque support d'imprimante (27) est réalisé par la zone de sommet (49) d'une première partie de paroi avant (22), stationnaire, et d'une deuxième partie de paroi avant (24), abaissable vers l'extérieur par rabattement, de la mallette de transport (10).
